(19) Europäisches Patentamt
European Patent Office
Office européen des brevets

(11) **EP 3 612 279 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **18721967.0**

(22) Anmeldetag: **18.04.2018**

(51) Internationale Patentklassifikation (IPC):
**A62C 35/68** (2006.01)   **A62C 35/60** (2006.01)
**G01F 1/00** (2022.01)   **G01F 1/075** (2006.01)
**G01F 1/28** (2006.01)   **G01F 5/00** (2006.01)
**G01F 15/063** (2022.01)

(52) Gemeinsame Patentklassifikation (CPC):
**A62C 35/68; G01F 1/075; G01F 1/28; G01F 5/00; G01F 15/063;** A62C 35/605

(86) Internationale Anmeldenummer:
**PCT/EP2018/059863**

(87) Internationale Veröffentlichungsnummer:
**WO 2018/192953 (25.10.2018 Gazette 2018/43)**

(54) **FEUERLÖSCHANLAGE, FEUERLÖSCHSYSTEM MIT SELBIGER, SOWIE VERFAHREN ZUM BESTIMMEN DER AUSBREITUNG EINES FEUERS**

FIRE-EXTINGUISHING FACILITY, FIRE-EXTINGUISHING SYSTEM COMPRISING SAME, AND METHOD FOR DETERMINING THE EXTENT OF A FIRE

INSTALLATION D'EXTINCTION D'INCENDIE, SYSTÈME D'EXTINCTION D'INCENDIE COMPORTANT CETTE DERNIÈRE, AINSI QUE PROCÉDÉ POUR LA DÉTERMINATION DE LA PROPAGATION D'UN FEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2017 DE 102017108233**

(43) Veröffentlichungstag der Anmeldung:
**26.02.2020 Patentblatt 2020/09**

(73) Patentinhaber: **Minimax GmbH**
**23843 Bad Oldesloe (DE)**

(72) Erfinder:
• **HOFMANN, Klaus**
 **23843 Bad Oldesloe (DE)**
• **BÖKE, Joachim**
 **40625 Düsseldorf (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**DE-A1-102011 011 496   US-A1- 2006 248 961**

EP 3 612 279 B1

**Beschreibung**

Die vorliegende Erfindung betrifft eine Feuerlöschanlage, mit mindestens einer Löschfluidleitung zum Fördern eines Löschfluids, wobei sich die Löschfluidleitung ausgehend von einer Hauptleitung in zwei oder mehr Nebenverteilerleitungen aufteilt, von denen eine Erste in eine erste Zone führt und eine Zweite in eine zweite Zone, wobei die Nebenverteilerleitungen innerhalb ihrer jeweiligen Zonen als Löschfluidleitungen für netzartig von ihnen abgehende Leitungen mit mehreren mit der Löschfluidleitung fluidleitend in Verbindung stehenden Sprinklern dienen, die in einem Bereitschaftszustand geschlossen sind, und in einem Löschzustand zum Ausbringen des Löschfluids geöffnet sind, einer mit der Löschfluidleitung verbundenen Ventilstation zum Freigeben eines Löschfluidstromes in Richtung der Sprinkler, und einer der Löschfluidleitung zugeordneten Durchflussmesseinrichtung.

Die Erfindung betrifft in einem weiteren Aspekt ein Feuerlöschsystem mit einer solchen Feuerlöschanlage. In noch einem weiteren Aspekt betrifft die Erfindung ein Verfahren zum Bestimmen der Ausbreitung eines Brandes bei einem mittels einer Feuerlöschanlage geschützten Objekt oder Bereich.

Feuerlöschanlagen sind allgemein bekannt. Mit Sprinklern versehene Feuerlöschanlagen, auch Sprinkleranlagen genannt, werden im Brandfall typischerweise ausgelöst, indem ein Aktivierungselement, welches am Sprinkler angeordnet ist, bei Überschreiten einer vorbestimmten Temperatur oder bei Erfassung sonstiger Brandkenngrößen einen im Bereitschaftszustand gesperrten Sprinkler freigibt. Das Löschfluid ist typischerweise Wasser, mitunter mit Zusätzen wie etwa schaumbildenden, korrosionshemmenden Mitteln oder Frostschutzmitteln. Der Sprinkler, der auf diese Weise vom Bereitschaftszustand in den Löschzustand versetzt wird, wird vom Löschfluid durchströmt, welches mittels des Sprinklers in Richtung des geschützten Bereichs, bzw. des geschützten Objekts abgegeben wird. Um es den Einsatzkräften zur Brandbekämpfung zu erleichtern, den Brand beispielsweise in einem größeren Gebäude zu lokalisieren, lässt sich bei bekannten Feuerlöschanlagen für die Einsatzkräfte rückverfolgen, in welchen Zonen Löschfluid fließt, d.h. in welchen Zonen einer oder mehrere Sprinkler ausgelöst wurden. Dies geschieht in der Regel mittels konkreter Alarmsignale, die im Wesentlichen zeitgleich mit oder nach Auslösung (mitunter mit definierter Zeitverzögerung) eines oder mehrerer Sprinkler aktiviert werden und die Zone angeben, in der der aktivierte Sprinkler sich befindet.

Es sind zur Alarmierung Strömungsmelder bekannt, die beim Erfassen einer Fluidströmung oberhalb eines vorbestimmten Grenzwertes ein solches Alarmierungssignal ausgeben.

Die bekannten Alarmmittel erlauben es den Einsatzkräften allerdings nicht, abzuschätzen, wie groß die Ausbreitung des Brandes im geschützten Objekt beim Eintreffen der Einsatzkräfte bereits ist, sondern lediglich die (grobe) Position. Sind die Alarmmittel zum Beispiel jeweils bestimmten Zonen zugeordnet, gibt ihre Auslösung lediglich die betroffene Zone an.

US 2006/248961 A1 betrifft ein System zur Durchflussmessung in Sprinkleranlagen, das Durchflusssensoren umfasst, die in Fluidleitungen der Sprinkleranlage eingesetzt werden, in denen Sprinklerköpfe angeordnet oder die mit Sprinklerköpfe aufweisenden Rohrleitungen verbunden sind. Ein Mikroprozessor erfasst die von den Durchflusssensoren ausgegebenen Signale und unterscheidet dann zwischen einem Leckagestrom im Bereitschaftszustand der Sprinkleranlage und einem Wasserfluss nach Auslösen eines Sprinklers.

Es bestand vor diesem Hintergrund Bedarf daran, eine Feuerlöschanlage der eingangs bezeichneten Art dahingehend weiterzubilden, dass eine genauere Bestimmung der Brandgröße beziehungsweise der Ausbreitung des Brandes mit möglichst einfachen Mitteln ermöglicht wird. Aufgabe der Erfindung war es demzufolge, eine Feuerlöschanlage bereitzustellen, die die vorstehend beschriebenen Nachteile möglichst weitgehend überwindet.

Die Erfindung löst die ihr zugrundeliegende Aufgabe bei einer Feuerlöschanlage der eingangs bezeichneten Art, indem die Durchflussmesseinrichtung in einer der Nebenverteilerleitungen oder unmittelbar in der Hauptleitung angeordnet und dazu eingerichtet ist, im Löschzustand einen in der Löschfluidleitung geförderten Volumenstrom des Löschfluids überschlägig quantitativ zu erfassen, und indem eine Auswerteinheit vorgesehen ist, die dazu eingerichtet ist, den überschlägig quantitativ erfassten Volumenstrom einer Anzahl der stromabwärts zur Durchflussmesseinrichtung (5) in den Leitungen geöffneten Sprinkler zuzuordnen. Unter dem Begriff der Löschfluidleitung wird erfindungsgemäß eine Hauptleitung oder Nebenverteilerleitung der Feuerlöschanlage verstanden, wobei die Hauptleitung diejenige Leitung ist, in der typischerweise die Ventilstation zum Verbinden der Feuerlöschanlage mit der Löschfluidversorgung angeordnet ist, und die Nebenverteilerleitung eine Leitung ist, die von der Hauptleitung abzweigt, und von der wiederum die Leitungen abzweigen, in denen die Sprinkler angeordnet sind.

Die Erfindung beruht auf der Erkenntnis, dass es zur Abschätzung der Ausbreitung des Brandes nicht erforderlich ist, exakt zu wissen, wie viel Löschfluid pro Zeiteinheit durch die Löschfluidleitung der Feuerlöschanlage gefördert wird. Es ist hingegen lediglich maßgeblich, ermitteln zu können, wie viele Sprinkler aktiv sind, da ein Brand umso mehr Sprinkler aktiv werden lässt, desto größer seine Ausbreitung wird. Ein Sprinkler fördert Löschfluid konstruktionsbedingt bei den gleichen Betriebsvoraussetzungen immer in etwa mit dem gleichen Volumenstrom. Eine Feuerlöschanlage, die auf einen bestimmten Betriebsdruck ausgelegt ist, wird bei diesem Betriebsdruck pro Sprinkler also immer in etwa denselben Volumenstrom an Löschfluid abgeben. Dies bedeutet, dass der durch die Löschfluidleitung geförderte Volumenstrom bei Aktivierung eines Sprinklers immer um einen bestimmten Betrag beziehungsweise eine bestimmte Größenordnung zunimmt. Hier setzt die Erfindung an, indem sie vorschlägt, den durch die Löschfluidleitung geförderten Löschfluidstrom lediglich überschlägig quantitativ zu erfassen. Ein Anstieg im Löschfluid-Volumenstrom kann grundsätzlich durch eine Schwankung im versorgerseitigen Löschfluiddruck begründet sein, oder andererseits in einem Öffnen eines oder mehrerer zusätzlicher Sprinkler. Die versorgerseitige Schwankung des Löschfluiddrucks ist in der Regel um Größenordnungen geringer als die Änderung des Löschfluid-Volumenstroms, wenn ein zusätzlicher Sprinkler geöffnet wird. Die Auswerteinheit ist erfindungsgemäß daher dazu eingerichtet, auf Basis des überschlägig erfassten Volumenstroms zu bestimmen, ob eine erfasste Volumenstromänderung größenordnungsmäßig mit dem Öffnen eines oder mehrerer Sprinkler korrespondiert. Die Aussage wiederum, ob ein, zwei oder mehr Sprinkler geöffnet sind, erlaubt es den anrückenden Einsatzkräften unmittelbar, Rückschlüsse über die Ausbreitung des Brandes im geschützten Objekt zu ziehen.

Die Auswerteinheit ist in bevorzugten Ausführungsformen der Erfindung entweder baulich in die Durchflussmesseinrichtung integriert, oder als separates Bauteil ausgeführt. Die Auswerteinheit als separates Bauteil ist vorzugsweise in oder an einer Feuerlöschanlagensteuereinheit angeordnet, oder extern zur Feuerlöschanlage. In letzterem Fall wird die Auswerteinheit in ein Feuerlöschsystem eingebunden, welches die Feuerlöschanlage umfasst, und ist vorzugsweise in einer Brandmelde- und/oder Feuerlöschzentrale angeordnet.

In einer bevorzugten Weiterbildung der Erfindung weist die Durchflussmesseinrichtung ein Rotorelement auf, und ist dazu eingerichtet, die Drehzahl des von dem Löschfluid angetriebenen Rotorelements zu erfassen. Das Rotorelement weist beispielsweise mehrere Paddel auf, oder ist als Turbinenrad ausgebildet.

In einer weiteren bevorzugten Ausführungsform weist die Durchflussmesseinrichtung einen Drucksensor zur Erfassung eines Staudrucks in der Löschfluidleitung auf, oder mehrere Drucksensoren an unterschiedlichen Stellen entlang der Löschfluidleitung zur Erfassung von Druckdifferenzen zwischen den Stellen.

In einer weiteren bevorzugten Ausführungsform weist die Durchflussmesseinrichtung einen Thermoanemometrie-Sensor auf, und ist dazu eingerichtet, Temperaturänderungen eines von dem Löschfluid umströmten Heizelementes des Thermoanemometrie-Sensors zu erfassen.

In einer weiteren bevorzugten Ausführungsform weist die Durchflussmesseinrichtung einen Ultraschall-Durchflussmesser auf, und ist dazu eingerichtet, die Geschwindigkeit zumindest eines Teilstroms des Löschfluids mittels Aussendungen und Empfang akustischer Wellen zu erfassen.

In einer weiteren bevorzugten Ausführungsform weist die Durchflussmesseinrichtung ein Strömungswiderstandselement, beispielsweise in Form eines Paddels oder dergleichen, auf, welches dazu eingerichtet ist, von dem Löschfluid umströmt zu werden und in Folge der Umströmung translatorisch und/oder rotatorisch ausgelenkt zu werden, wobei die Durchflussmesseinrichtung dazu eingerichtet ist, die Auslenkung des Strömungswiderstandelements qualitativ oder quantitativ zu erfassen, insbesondere mittels Erfassung der auf das Strömungswiderstandelement wirkenden Kraft oder mittels Erfassung des Betrags der Auslenkung.

In einer weiteren bevorzugten Ausführungsform weist die Durchflussmesseinrichtung einen Spannungsmessaufnehmer auf und ist dazu eingerichtet, eine von einem Generator induzierte Spannung zu messen, wobei der Generator von einem Rotorelement angetrieben ist, welches von Löschfluid umströmt wird.

Die vorstehend beschriebenen bevorzugten Ausführungsformen stellen verschiedene erprobte und in anderen Einsatzsituationen wohlbekannte Messmethoden zur Strömungserfassung dar. In bevorzugten Ausgestaltungen der Erfindung werden eine, mehrere oder sämtliche der Durchflussmesseinrichtungen miteinander kombiniert.

In einer bevorzugten Ausführungsform der Erfindung erfolgt die Zuordnung zwischen dem überschlägig erfassten Volumenstrom und der Anzahl geöffneter Sprinkler in Abhängigkeit eines, mehrerer oder sämtlicher der folgenden Parameter:

- ein vorbestimmtes Verhältnis zwischen dem tatsächlichen Volumenstrom des Löschfluids und dem von der Durchflussmesseinrichtung erfassten Volumenstrom,

- dem/den K-Faktoren der jeweiligen Sprinkler, und/oder

- dem Löschfluiddruck in der Löschfluidleitung.

Die Auswerteinheit ist vorzugsweise mittels einer entsprechenden Datenschnittstelle mit diesen Parametern programmierbar.

Das vorbestimmte Verhältnis zwischen dem tatsächlichen Volumenstrom des Löschfluids und dem von der Durchflussmesseinrichtung erfassten Volumenstrom wird vorzugsweise in Vorversuchen ermittelt und liegt vorzugsweise in Form einer Kennlinie vor. Es gibt an, wie hoch bei einem bestimmten erfassten Messwert der tatsächliche Volumenstrom in der Löschfluidleitung überschlägig ist. Das Verhältnis hängt vom Einbauort der Durchflussmesseinrichtung, den Strömungsverhältnissen am Einbauort und dem angewandten Messprinzip ab. Typischerweise wird in einer Reihe von Vorversuchen eine gemittelte Kennlinie erstellt.

Der K-Faktor ist ein Koeffizient für den Durchfluss des Sprinklers, konstruktionsbedingt und für jeden Sprinklertyp bekannt, vgl. bspw. EN 12259-1.

Der Durchfluss durch den Sprinkler ergibt sich beispielsweise nach EN 12845:2015 + AC:2016 aus der Gleichung

$$Q = K \sqrt{p},$$

mit

Q als dem Durchfluss in l/min,

p als dem Druck in bar, und

K als dem Durchfluss-Koeffizient für den Sprinkler.

Jede Kombination aus Druck und K-Faktor ergibt für den Sprinkler einen Standard-Mindestdurchfluss. Bei Aktivierung steigt der Volumenstrom in der Löschfluidleitung um diesen Wert an. Typischerweise liegt dieser Durchflusswert oberhalb von 40 l/min, so dass eine Erfassung eines Durchflusswertes, welcher in etwa einem ganzzahligen Vielfachen dieses sprinklerabhängigen Q-Wertes entspricht, eine einfache Zuordnung zu der Zahl an geöffneten Sprinklern erlaubt.

Mittels der oben definierten Parameter ist die Auswerteinheit in der Lage, algorithmisch zu bestimmen, ob der überschlägig erfasste Volumenstrom einen oder mehreren aktivierten Sprinklern zuzuordnen ist, oder ob eine erfasste Volumenstromänderung zu gering ist, um den Rückschluss auf einen zusätzlich aktivierten Sprinkler zu erlauben.

In einer weiteren bevorzugten Ausführungsform der Erfindung ist die Auswerteinheit dazu eingerichtet, den Verlauf der überschlägigen Erfassung des in der Löschfluidleitung geforderten Volumenstroms über die Zeit zu protokollieren, und vorzugsweise in einem auslesbaren Datensatz zu hinterlegen. Die Auswerteinheit weist, dem Fachmann jeweils allgemein bekannt, die hierfür notwenigen Prozessor- und Datenspeichermittel auf.

In einer weiteren bevorzugten Ausführungsform, bei der die Durchflussmesseinrichtung ein Rotorelement aufweist, ist das Rotorelement der Durchflussmesseinrichtung mit einem Generator zur Erzeugung elektrischer Energie gekoppelt.

In einer weiteren bevorzugten Ausführungsform weist die Durchflussmesseinrichtung Mittel zur drahtlosen oder kabelgebundenen Datenübertragung auf, und ist dazu eingerichtet, die Werte des überschlägig erfassten Volumenstroms an die Auswerteinheit zu senden. Die Mittel zur Datenübertragung umfassen vorzugsweise eine Sende- und/oder Empfangsvorrichtung zur unidirektionalen oder bidirektionalen Datenübertragung, beispielsweise ein WiFi-Modul. Insbesondere die Ausbildung einer empfangsfähigen Durchflussmesseinrichtung ermöglicht das Aufspielen von Kalibrierdaten und Soft- bzw. Firmware-Updates, besonders bevorzugt per Datenfernübertragung.

Insbesondere bei Kombination der beiden vorstehend genannten Aspekte, also des Koppelns des Rotorelements mit einem Generator zur Erzeugung elektrischer Energie und einer Durchflussmesseinrichtung mit Mitteln zur Datenübertragung, weist die Feuerlöschanlage, und insbesondere die Durchflussmesseinrichtung, weiter vorzugsweise einen Energiespeicher für die von dem Generator erzeugte elektrische Energie auf, wobei der Energiespeicher mit den Mitteln zur Datenübertragung zu deren Energieversorgung verbunden ist. Dies erlaubt eine Vereinfachung der Infrastruktur der Feuerlöschanlage, da die Mittel zur Datenübertragung für den Fall, dass die Feuerlöschanlage und ihre Sprinkler sich in Bereitschaftszustand befinden, nicht zwingend mit externer elektrischer Energie versorgt werden muss. Bei der der überwiegenden Anzahl der im Einsatz befindlichen Feuerlöschanlagen ist es ein absoluter Ausnahmefall, dass die Feuerlöschanlage tatsächlich aktiv werden muss. Dadurch, dass die Feuerlöschanlage über lange Zeiträume, teils viele Jahre lang, den Bereitschaftszustand nur für vorgeschriebene Funktionstests verlässt, wird durch die autarke Energieversorgung der Mittel zur Datenübertragung potenziell eine spürbare finanzielle Einsparung möglich.

Die erfindungsgemäße Feuerlöschanlage weist in einer besonders bevorzugten Ausführungsform wenigstens ein Anzeigegerät auf, das mit der Auswerteinheit kommuniziert und dazu eingerichtet ist, die dem erfassten Volumenstrom zugeordnete Anzahl geöffneter Sprinkler anzuzeigen. Das Anzeigegerät ist vorzugsweise an einem allgemein für Einsatzkräfte zugänglichen Ort, direkt am/im überwachten Objekt bzw. Bereich, und/oder extern zu der Feuerlöschanlage angeordnet. In letzterem Fall ist das eine bzw. sind die mehreren Anzeigegeräte vorzugsweise in ein Feuerlöschsystem eingebunden und als mobile Geräte ausgebildet und/oder in oder an einer Brandmelde- und/der Feuerlöschzentrale angeordnet.

Das Anzeigegerät ist in bevorzugten Ausführungsformen wahlweise zur kabelgebundenen Signalübertragung oder zur drahtlosen Signalübertragung mit der Auswerteinheit verbunden beziehungsweise verbindbar.

Vorzugsweise ist die Durchflussmesseinrichtung dazu eingerichtet, selbsttätig mit der Übertragung der überschlägig erfassten Volumenströme zu beginnen, sobald ein Löschfluidstrom detektiert wird, der einen vorbestimmten Grenzwert überschreitet. Vorzugsweise ist die Durchflussmesseinrichtung dazu eingerichtet, mit der Übertragung nach Verstreichen einer vordefinierten Verzögerungszeit mit der Übertragung zu beginnen.

In einer weiteren bevorzugten Ausführungsform der Feuerlöschanlage, die eine Durchflussmesseinrichtung mit Rotorelement umfasst, ist das Rotorelement der Durchflussmesseinrichtung peripher in der Löschfluidleitung angeordnet. Hierunter ist zu verstehen, dass das Rotorelement in unmittelbarer Nähe der Wandung der Rohrleitung angeordnet ist, und sich nicht bis in die Mitte der Löschfluidleitung hinein erstreckt. Hierdurch wird erreicht, dass der Volumenstrom weitestgehend ungehindert durch die Löschfluidleitung strömen kann. Der Strömungswiderstand, der durch die Durchflussmesseinrichtung verursacht wird, wird hierdurch minimiert. Das überschlägige Erfassen des Volumenstroms ist aber unvermindert möglich. Die Durchflussmesseinrichtung weist vorzugsweise ein Sieb zum Schutz des Rotorelements vor Verschmutzung auf.

Vorzugsweise weist das Rotorelement einen Rotordurchmesser auf, und erstreckt sich mit weniger als dem Rotordurchmesser, insbesondere mit weniger als der Hälfte des Rotordurchmessers, innerhalb der Löschfluidleitung. Dies ist insbesondere von Vorteil für Rotorelemente, bei denen die Rotorachse tangential oder tangentenparallel zur Wandung der Löschfluidleitung ausgerichtet ist, und senkrecht zur Längsachse der Löschfluidleitung verläuft.

Besonders bevorzugt weist die Durchflussmesseinrichtung ein Abschirmelement auf, welches stromaufwärts benachbart zu dem Rotorelement in der Löschfluidleitung angeordnet ist, und das Rotorelement derart umgibt, dass das Rotorelement teilweise von der Strömung in der Löschfluidleitung abgeschirmt wird. Wird beispielsweise eine von zwei Seiten des Rotorelements abgeschirmt, wird dem Rotorelement die Drehrichtung vorgegeben, sofern auf beiden Seiten des Rotorelements dieselbe Strömung anliegt. Somit erleichtert das Abschirmelement auch das Rotieren des Rotorelements, da die Strömung nur auf eine Seite der Rotorachse geleitet wird, während die zweite Seite, von der Rotorseite aus gesehen, abgeschirmt bleibt.

In einer alternativen bevorzugten Ausführungsform ist die Durchflussmesseinrichtung in einer Bypassleitung angeordnet, die von der Löschfluidleitung abzweigt. Das Anordnen der Durchflussmesseinrichtung in der Bypassleitung macht sich die Erkenntnis zunutze, dass es ausreichend ist, lediglich einen Teilstrom des insgesamt durch die Feuerlöschanlage strömenden Löschfluids messtechnisch zu beobachten, weil durch Vergleich des von der Durchflussmesseinrichtung erfassten Volumenstroms mit einer vordefinierten Betriebskennlinie bei konstruktiv unverändertem Aufbau jederzeit überschlägig abgeschätzt werden kann, wie hoch der Volumenstrom in der Löschfluidleitung bei einem gegebenen gemessenen Volumenstrom in der Bypassleitung ist.

Die Bypassleitung weist, vorzugsweise einlassseitig, in bevorzugten Ausführungsformen ein Sieb und/oder einen Filter zum Schutz der Bypassleitung und der darin angeordneten Durchflussmesseinrichtung vor Verschmutzung auf.

In einer ersten bevorzugten Ausgestaltung der Bypassleitung zweigt jene an einer ersten Zweigstelle von der Löschfluidleitung ab, und mündet stromabwärts an einer zweiten Zweigstelle wieder in die Löschfluidleitung.

In einer alternativen bevorzugten Ausgestaltung zweigt die Bypassleitung, in Flussrichtung des Löschfluids gesehen, an einer gemeinsamen Zweigstelle von der Löschfluidleitung ab, und mündet an der gemeinsamen Zweigstelle wieder in der Löschfluidleitung. Dies kann konstruktiv umgesetzt werden, indem beispielsweise die Bypassleitung eine Zweigleitung aufweist, die innerhalb einer Mündungs-Zweigleitung geführt ist und in einer Leitungsschleife verläuft, um schließlich seitlich in die Mündungs-Zweigleitung eingeführt zu werden. Die Mündungs-Zweigleitung kann mit einem einzelnen T-Stück an die Löschfluidleitung angesetzt werden, und die Zweigleitung erstreckt sich durch die Mündungs-Zweigleitung hindurch in die Löschfluidleitung hinein. Diese Ausgestaltung ist sowohl hinsichtlich der benötigten Armaturen als auch hinsichtlich des erforderlichen Bauraumes vorteilhaft.

Die Erfindung wurde vorstehend unter Bezugnahme auf die Feuerlöschanlage selbst beschrieben. In einem weiteren Aspekt betrifft die Erfindung aber auch ein Feuerlöschsystem, welches die erfindungsgemäße Feuerlöschanlage als einen Systembestandteil umfasst.

Das erfindungsgemäße Feuerlöschsystem, welches sich die Vorteile und bevorzugten Ausführungsformen der vorstehend beschriebenen Feuerlöschanlage vollumfänglich zunutze macht, wird vorteilhaft dadurch weitergebildet, dass es ein oder mehrere, vorzugsweise mobile, Anzeigegeräte umfasst, die mit der Durchflussmesseinrichtung und/oder der Auswerteinheit kommunizieren, und dazu eingerichtet sind, die dem erfassten Volumenstrom zugeordnete Anzahl geöffneter Sprinkler anzuzeigen. Die mobilen Anzeigegeräte sind vorzugsweise tragbare Handgeräte, beispielsweise Tablets oder Smartphones, und werden mit einer in Abstimmung mit der Durchflussmesseinrichtung der Feuerlöschanlage programmierten App betrieben, die in entweder fest definierten Aktualisierungszeitabständen oder in Folge manueller Aktualisierung die jeweils von der Durchflussmesseinrichtung erfasste und zugeordnete Anzahl geöffneter Sprinkler anzeigen, sowie vorzugsweise die Zone, in denen der oder die Sprinkler geöffnet sind, falls die Feuerlöschanlage eine Mehrzonen-Feuerlöschanlage ist.

Das erfindungsgemäße Verfahren wird vorteilhaft weitergebildet, indem das überschlägige Erfassen des Volumenstroms einen, mehrere oder sämtliche der folgenden Schritte umfasst:

- Erfassen der Drehzahl eines von dem Löschfluid angetriebenen Rotorelements;
- Erfassen von Druckdifferenzen an unterschiedlichen Stellen entlang der Löschfluidleitung;
- Erfassen von Temperaturänderungen eines von dem Löschfluid umströmten Halselements;
- Erfassen der Geschwindigkeit zumindest eines Teilstroms des Löschfluids mittels Aussendung und Empfang akustischer Wellen;
- Qualitative oder Quantitative Erfassung der Auslenkung eines Strömungswiderstandselements, insbesondere mittels Erfassung der auf das Strömungswiderstandselement wirkende Kraft oder mittels Erfassung des Betrags der Auslenkung des Strömungswiderstandselements, welches von dem Löschfluid umströmt wird und in Folge der Umströmung ausgelenkt wird; und/oder

- Erfassen der Spannung, die von einem mittels des Rotorelements angetriebenen Generator erzeugt wird.

Das Verfahren wird vorzugsweise ferner weitergebildet, indem das überschlägige Erfassen des Volumenstroms ferner umfasst:

- Erstellen oder Bereitstellen einer Kennlinie, welche die Korrelation zwischen dem von der Durchflussmesseinrichtung erfassten Volumenstrom und dem tatsächlichen Volumenstrom in der Löschfluidleitung der Feuerlöschanlage definiert.

Vorzugsweise wird die Erstellung oder Bereitstellung der Kennlinie in vorbestimmten Zeitabständen wiederholt, beispielsweise alle fünf bis zehn Jahre. Hierdurch kann eine zeitbedingte Verschlechterung des freien Strömungsquerschnitts in der Feuerlöschanlage, beispielsweise aufgrund von Korrosion, berücksichtigt werden. Der jeweils aktuelle Zustand der Löschfluidleitung kann beispielsweise überprüft werden, indem Löschfluid mittels eines Entleerungsventils aus der Haupt- oder einer Nebenverteilerleitung entnommen wird, um die Öffnung eines oder mehrerer Sprinkler zu simulieren. Über einen dabei ermittelten Volumenstromwert lässt sich abschätzen, ob und wie stark Verschmutzungen innerhalb der Löschfluidleitung zu einer Verringerung ausgeprägt sind, und im Bedarfsfall in erneuten Versuchen eine neue Kennlinie für die Durchflussmesseinrichtung ermitteln zu können.

Das Verfahren umfasst vorzugsweise ferner den Schritt:

- Protokollieren des Verlaufs der überschlägigen Erfassung des in der Löschfluidleitung geförderten Volumenstroms über die Zeit, und vorzugsweise Hinterlegen des Protokolls in einem auslesbaren Datensatz.

Ferner umfasst das Verfahren vorzugsweise den Schritt: Drahtlose oder kabelgebundene Datenübertragung der Werte des überschlägig erfassten Volumenstroms und/oder des Datensatzes mit dem protokollierten Verlauf der überschlägigen Erfassung des in der Löschfluidleitung geförderten Volumenstroms an eine Auswerteinheit und/oder ein oder mehrere Anzeigegeräte, und/oder sonstige Empfangsgeräte, vorzugsweise mittels drahtloser oder kabelgebundener Datenübertragung.

Das Verfahren umfasst vorzugsweise ferner:

Energieversorgung der Mittel zur Datenübertragung mittels eines von einem Rotorelement der Durchflussmesseinrichtung angetriebenen Generators.

Das Verfahren wird ferner vorzugsweise weitergebildet durch den Schritt: Anzeigen der dem erfassten Volumenstrom zugeordneten Anzahl geöffneter Sprinkler auf einem Anzeigegerät, das mit der Durchflussmesseinrichtung kommuniziert.

Die Erfindung wird im Folgenden unter Bezugnahme auf die beigefügten Figuren anhand mehrerer bevorzugter Ausführungsbeispielen beschrieben.

Hierbei zeigen:

Fig. 1: eine schematische Darstellung einer Feuerlöschanlage gemäß einem bevorzugten Ausführungsbeispiel der Erfindung,

Fig. 2: eine Variante der Feuerlöschanlage gemäß Figur 1,

Fig. 3: eine erste Variante der Durchflussmesseinrichtung für die Feuerlöschanlage gemäß Figur 1 oder 2,

Fig. 4: eine weitere Variante einer Durchflussmesseinrichtung für die Feuerlöschanlage gemäß Figur 1 oder 2,

Fig. 5: eine weitere Variante einer Durchflussmesseinrichtung für die Feuerlöschanlage gemäß Figur 1 oder 2,

Fig. 6: eine weitere Variante einer Durchflussmesseinrichtung für die Feuerlöschanlage gemäß Figur 1 oder 2,

Fig. 7: eine weitere Variante einer Durchflussmesseinrichtung für die Feuerlöschanlage 1 gemäß Figur 1 oder 2, und

Fig. 8: eine weitere Variante einer Durchflussmesseinrichtung für die Feuerlöschanlage 1 gemäß Figur 1 oder 2.

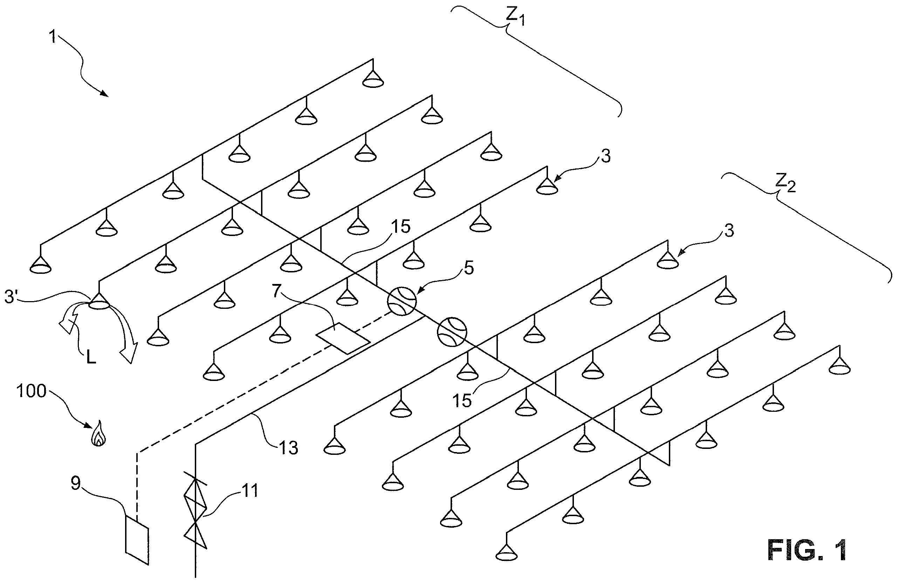

Die in Figur 1 dargestellte Feuerlöschanlage 1 weist eine Löschfluidleitung mit einer Hauptleitung 13 auf, die mit einer Ventilstation 11 verbunden ist. Die Ventilstation 11 stellt die fluidleitende Verbindung zwischen (nicht dargestellten) Löschfluidversorgung und dem Rohrleitungsnetz der Feuerlöschanlage 1 her. Die Löschfluidleitung teilt sich ausgehend von der Hauptleitung 13 in zwei oder mehr Nebenverteilerleitungen 15, von denen eine Erste in eine erste Zone $Z_1$ führt, und eine zweite in eine zweite Zone $Z_2$. Die Nebenverteilerleitungen 15 dienen innerhalb ihrer jeweiligen Zonen weiterhin als Löschfluidleitung für die netzartig von ihnen abgehenden Leitungen mit Sprinklern 3. In den beiden Zonen $Z_{1,2}$ sind mehrere Sprinkler 3 angeordnet. Wird einer der Sprinkler, beispielsweise durch Auslösung eines thermischen Aktivierungselements, von seinem Bereitschaftszustand in den Löschzustand versetzt, wie der exemplarisch dargestellte Sprinkler 3', strömt Löschfluid L aus dem Sprinkler in Richtung eines Brandes 100. Durch die Ventilstation 11 wird der Löschfluidstrom freigegeben, welcher den/die aktivierten Sprinkler 3' versorgt.

Die Feuerlöschanlage 1 weist ferner eine Durchflussmesseinrichtung 5 auf, welche dazu eingerichtet ist, den Volumenstrom, der sich durch die Löschfluidleitung 13,15 bewegt, überschlägig zu erfassen und in Abhängigkeit des erfassten Volumenstroms eine Zuordnung vorzunehmen, wie viele Sprinkler 3' in der Feuerlöschanlage 1 aktiviert sind. Es können, wie in Figur 1 angedeutet, für jede Zone eine oder mehrere Durchflussmesseinrichtungen vorgesehen werden, um etwaigen Einsatzkräften die örtliche Eingrenzung des Brandes zu erleichtern. Die Durchflussmesseinrichtung 5 ist mit einer elektronischen Auswerteinheit 7 signalleitend verbunden, wobei die elektronische Auswerteinheit 7 die Auswertfunktion der von der Durchflussmesseinrichtung 5 ermittelten Messwerte vornimmt. Beide Bauteile können aber auch in eine Einheit integriert sein.

Die Durchflussmesseinrichtung 5 ist ferner signalleitend (entweder unmittelbar, oder mittelbar über die Auswerteinheit 7) mit einem Anzeigegerät 9 verbunden, welches als stationäre Anzeige beispielsweise an Zugangsorten zu dem von der Feuerlöschanlage 1 geschützten Objekt angeordnet sein kann, oder in einer Brandmelde- und/oder Feuerlöschzentralen. Alternativ oder zusätzlich können ein oder mehrere mobile Anzeigegeräte vorgesehen sein, die beispielsweise in Form von Tablets oder Smartphones vorliegen und eine App ausführen, die dazu programmiert ist, die von der Durchflussmesseinrichtung 5 mit Hilfe der Auswerteinheit 7 ermittelte Zuordnungszahl der geöffneten Sprinkler anzuzeigen. Vorzugsweise ist die App dazu programmiert, die Anzahl und Anordnung der geöffneten Sprinkler in einer graphischen Darstellung, etwa mittels Anzeiger der Zone des geschätzten Objekts oder Bereichs, in einem Lageplan anzuzeigen.

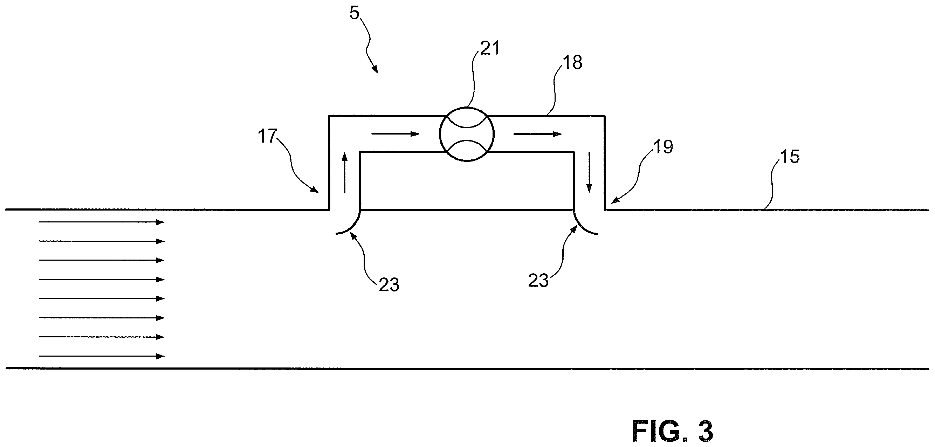

In Figur 1 ist die Durchflussmesseinrichtung 5 nur schematisch dargestellt. Verschiedene bevorzugte Ausführungsbeispiele für die Durchflussmesseinrichtung 5 sind in den Figuren 3 bis 8 abgebildet.

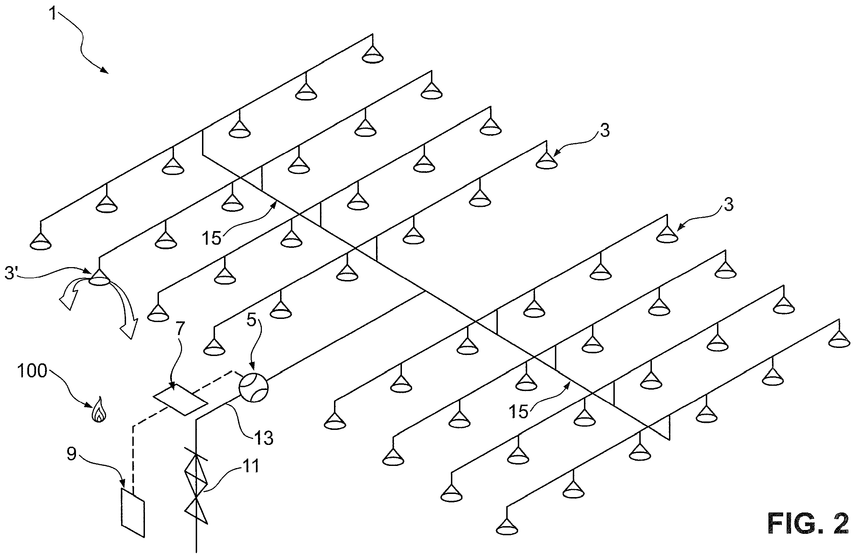

Die Feuerlöschanlage 1 in Figur 2 stimmt in wesentlichen Teilen mit derjenigen aus Figur 1 überein, weswegen für identische oder funktionsgleiche Elemente dieselben Bezugszeichen verwendet werden. Es wird bezüglich jener Elemente auf die Ausführungen zu den übrigen Figuren verwiesen. Die in Figur 2 gezeigte Feuerlöschanlage 1 unterscheidet sich dahingehend von Figur 1, dass nur eine Durchflussmesseinrichtung 5 vorgesehen ist, und unmittelbar der Hauptleitung 13 anstelle der Nebenverteilerleitung 15 zugeordnet ist.

Figur 3 zeigt zunächst eine Durchflussmessrichtung 5, die einen Sensor 21 nach einer weiter oben allgemein beschriebenen bevorzugten Ausführungsformen aufweist, der in einer Bypassleitung 18 angeordnet ist. Die Bypassleitung 18 zeigt an einer ersten Stelle 17 (erste Zweigstelle) von der Löschfluidleitung 15 ab, und mündet an einer zweiten, stromabwärts der ersten Stelle 17 (erste Zweigstelle) angeordneten Stelle 19 (zweite Zweigstelle) wieder in die Löschfluidleitung 15.

Zum Unterstützen der Strömungsabführung beziehungsweise Strömungsrückführung aus der beziehungsweise in die Löschfluidleitung 13, 15 sind an den Zweigstellen 17, 19 jeweils Strömungsleitelemente 23 angeordnet, beispielsweise als Leitbleche ausgebildet. Die aus der Löschfluidleitung 13, 15 abgeführte Strömung stellt nur einen Teilstrom des gesamten Volumenstroms in der Löschfluidleitung 13, 15 dar. Die Strömungsgeschwindigkeit in Wandungsnähe der Löschfluidleitung 13, 15 ist in der Praxis geringer als in der Mitte der Löschfluidleitung 13, 15. Im Rahmen von Vorversuchen wird vorzugsweise deshalb eine Kennlinie ermittelt, welche die Korrelation zwischen den in der Bypassleitung 18 gemessenen Volumenströmen und dem tatsächlich in der Löschfluidleitung 5 strömenden Volumenstrom, der bei den Vorversuchen vorgegeben werden kann, definiert. Die Kennlinie kann auch nicht-linear verlaufen und stellt in jedem Fall sicher, dass der Volumenstrom in der Löschfluidleitung 13, 15 überschlägig mit zufriedenstellender Genauigkeit erfasst werden kann, um eine Zuordnung zwischen Volumenstrom und Anzahl geöffneter Sprinkler herzustellen.

Zugleich kann das Löschfluid weiterhin weitestgehend ungehindert durch die Löschfluidleitung 13, 15 hindurch strömen, da lediglich in der Peripherie der Strömung ein Teilstrom abgeführt wird.

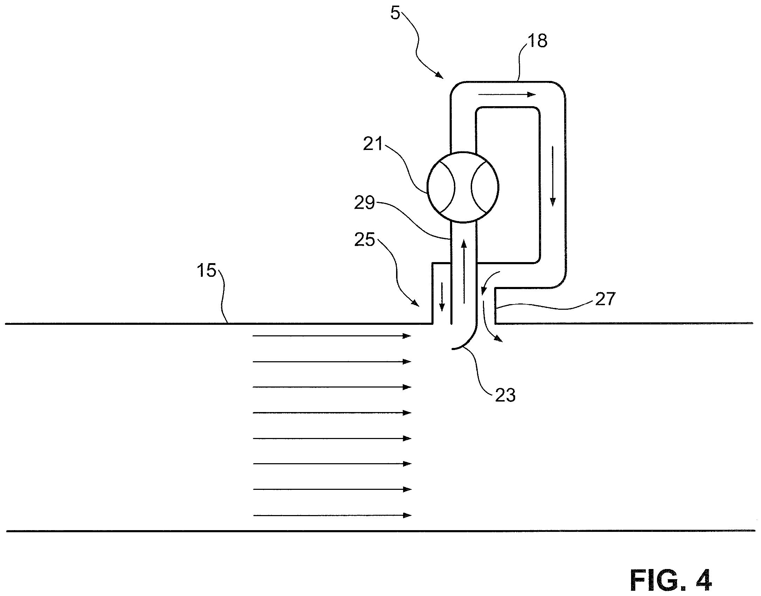

Figur 4 zeigt im Vergleich zu Figur 3 eine alternative Ausgestaltung der Bypassleitung 18. Im Unterschied zu der Ausführungsform gemäß Figur 3 sind nicht zwei verschiedene Zweigstellen 17, 19 vorgesehen, sondern eine gemeinsame Zweigstelle 25, an der sowohl eine abführende Zweigleitung 29 als auch eine zurückführende Zweigleitung 27 (Mündungs-Zweigleitung) der Bypassleitung 18 mit der Löschfluidleitung 15 verbunden sind. Die abführende Zweigleitung 29 (Abzweigleitung) ist vorzugsweise durch die rückführende Zweigleitung 27 (Mündungs-Zweigleitung) hindurchgeführt, und die Bypassleitung 18 durchläuft eine Schleife, bevor sie, insbesondere seitlich, in die rückführende Zweigleitung 27 (Mündungs-Zweigleitung) mündet. Die Ausführungsform gemäß Figur 4 vereint verringerten apparativen Aufwand und minimierten Bauraum vorteilhaft miteinander.

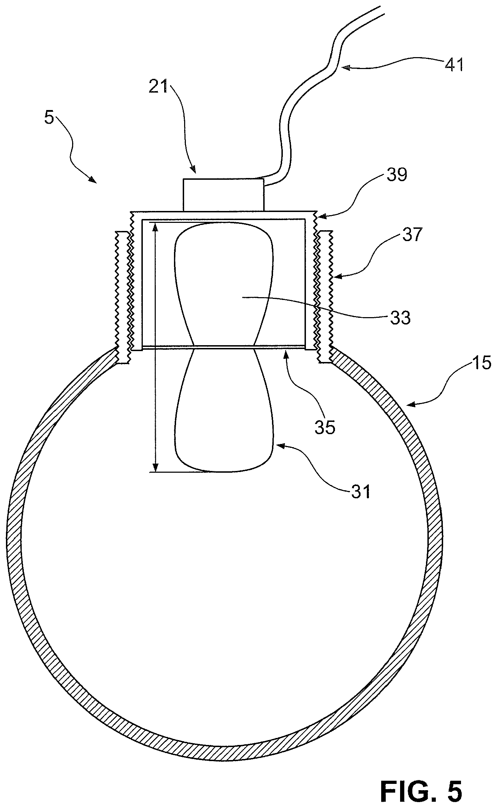

Figur 5 zeigt eine Detailansicht einer Feuerlöschanlage gemäß Figur 1 oder 2, bei der die Durchflussmesseinrichtung 5 nicht in einem Bypass angeordnet ist, so wie das in Figuren 3 und 4 der Fall ist. Stattdessen ist die Durchflussmesseinrichtung 5 der Figur 5 direkt in die Peripherie der Löschfluidleitung 13, 15 gesetzt. Die Durchflussmesseinrichtung 5 weist ein Rotorelement 31 auf, welches mehrere Rotorblätter 33 aufweist, die um eine Rotorachse 35 rotierend gelagert sind.

Das Rotorelement 31 ist vorzugsweise mittels eines Einsatzes 39 in die Peripherie der Löschfluidleitung 15 eingesetzt, wobei der Einsatz 39 in ein Fitting 37 einschraubbar ist. Hierdurch werden die Einsetztiefe und die winklige Ausrichtung des Rotorelements einstellbar gehalten. Vorzugsweise das Fitting 37 als T-Stück oder Anbohrschelle ausgeführt.

Der in Figur 5 dargestellte Sensor 21 ist vorzugsweise als Hall-Sensor ausgebildet. Eines, mehrere oder sämtliche Rotorblätter 33 sind dann vorzugsweise teilweise oder vollständig magnetisch ausgebildet, um den Hall-Sensor anzusprechen.

Die Durchflussmesseinrichtung 5 der Figur 5 ist durch Mittel zur Datenübertragung signalleitend mit dem in Figur 1 oder 2 gezeigten Anzeigegerät 9 und/oder der Auswerteinheit 7 verbunden, hier angedeutet durch eine oder mehrere Kabelleitungen 41. Alternativ ist die Durchflussmesseinrichtung zur drahtlosen Kommunikation mit dem/den Anzeigegerät(en) eingerichtet. In dem Fall umfassen die Mittel zur Datenübertragung eine Sende- und/oder Empfangseinrichtung, vorzugsweise mit einem WiFi Modul, wie sie in den folgenden Figuren schematisch dargestellt ist.

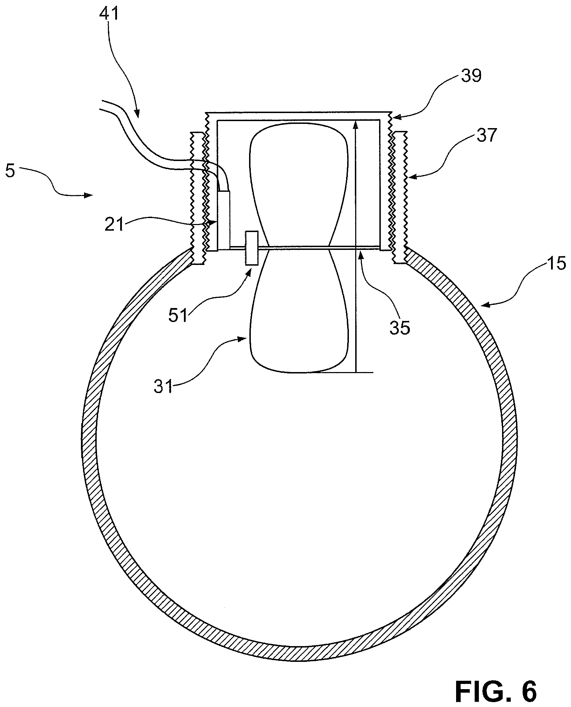

Eine Abwandlung der Messanordnung aus Figur 5 zeigt Figur 6. Die in Figur 6 dargestellte Variante der Durchflussmesseinrichtung 5 weist ebenfalls einen als Hall-Sensor ausgebildeten Sensor 21 zur Erfassung der Drehzahl des Rotorelements auf. Dieser Sensor 21 ist allerdings innerhalb des Gehäuses des Einsatzes 39 angeordnet, und zum Ansprechen des Sensors 21 werden nicht die Rotorblätter 33 (vgl. Figur 5) genutzt, sondern es ist ein Erregerelement 51 mit dem Rotorelement 31 auf dessen Rotorachse 35 wirkverbunden, dessen Rotation von dem Sensor 21 erfasst wird. Das Erregerelement ist zumindest teilweise magnetisch ausgebildet, beispielsweise als Magnetring.

In Ausführungsformen, in denen das Gehäuse des Einsatzes 39 nicht ferromagnetisch ausgebildet ist, könnte alternativ der Sensor 21 auch außerhalb des Einsatzes 39 angeordnet sein, wie beispielsweise in Fig. 5 bereits gezeigt.

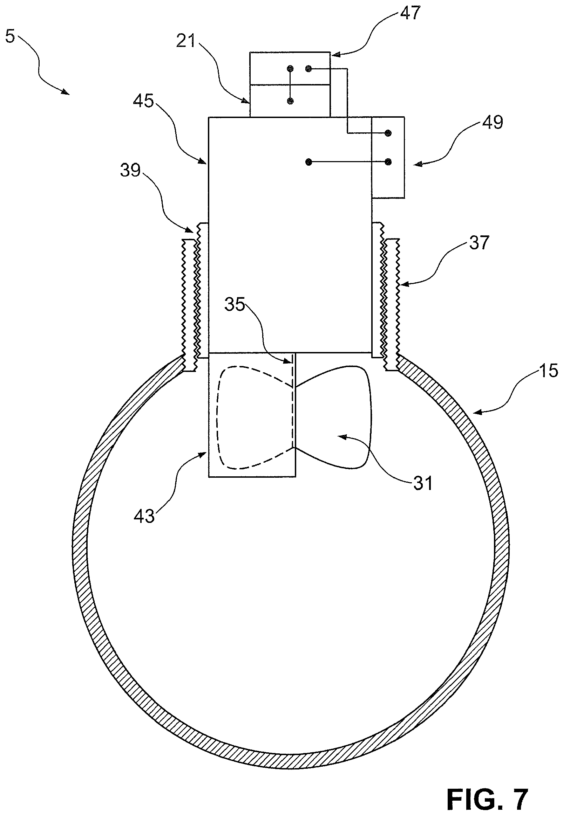

Auch die in Figur 7 dargestellte Durchflussmesseinrichtung für die Feuerlöschanlage 1 gemäß Figur 1 oder 2 basiert auf einem Rotorelement 31, welches in Folge der Löschfluidströmung in Bewegung versetzt wird. In Abweichung zu den Ausführungsformen gemäß Figuren 5 - 6 ist die Rotorachse 35 des Rotorelements 31 im Wesentlichen radial bezogen auf die Strömungsrichtung in der Löschfluidleitung 15 ausgerichtet. Um die Bewegung des Rotorelements 31 zu unterstützen und vor negativen Strömungseffekten zu schützen, weist die Durchflussmesseinrichtung 5 gemäß Figur 7 ferner ein Abschirmelement 43 auf, welches das Rotorelement 31 partiell umgibt. Auch die Durchflussmesseinrichtung 5 gemäß Figur 7 ist vorzugsweise eingeschraubt. Diesbezüglich wird auf die Ausführungen zu Figur 5 und 6 verwiesen.

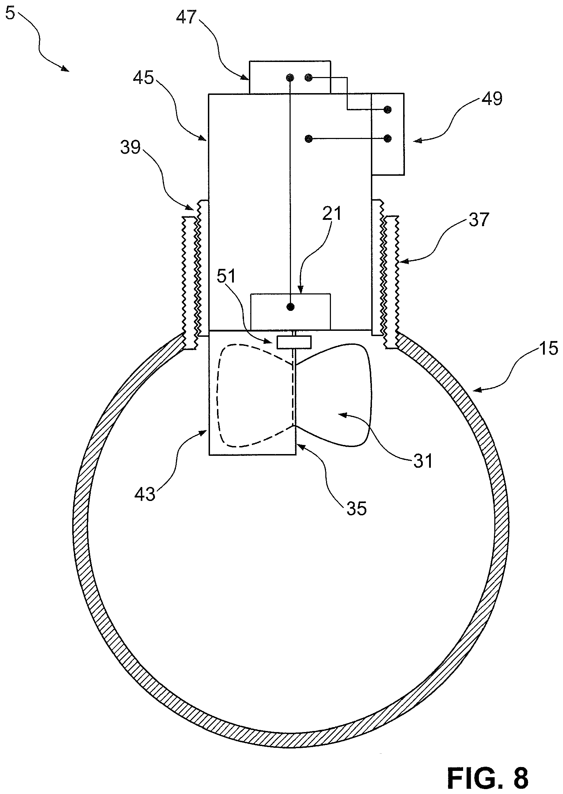

Die Durchflussmesseinrichtung 5 gemäß Figur 7 weist zusätzlich einen Generator 45 auf, der dazu eingerichtet ist, die Rotationsbewegung des Rotorelements 31 in elektrische Spannung zu wandeln. Der Sensor 21, der in der Durchflussmesseinrichtung 5 gemäß Figur 7 verbaut ist, ist vorzugsweise als Spannungsmessaufnehmer ausgebildet und greift die von dem Generator erzeugte Spannung ab. Alternativ ist der Sensor 21 als Hall-Sensor ausgebildet, wie etwa in Figuren 5, 6 oder in der nachfolgenden Figur 8, und dazu eingerichtet, die Drehzahl des Rotorelements 31 aufzunehmen und als Messgröße weiterzugeben.

Die Durchflussmesseinrichtung 5 gemäß Figur 7 weist als Mittel zur Datenübertragung an die Auswerteinheit 7 (vgl. Fig. 1, 2) und/oder ein oder mehrere Anzeigegeräte 9 (vgl. Figuren 1, 2) eine Sende- und/oder Empfangseinrichtung 47 auf, und wird besonders bevorzugt mittels der von dem Generator 43 erzeugten Spannung mit elektrischer Energie versorgt. Es kann bevorzugt sein, dass der Generator 43 beziehungsweise die Durchflussmesseinrichtung 5 zusätzlich einen Energiespeicher 49 zum (temporären) Speichern der elektrischen Energie aufweist, die von dem Antreiben des Rotorelements 31 ausgehend erzeugt wird. Vorzugsweise weist die Durchflussmesseinrichtung 5 einen Anschluss für eine externe Stromversorgung auf.

Die Durchflussmesseinrichtung 5 gemäß Figur 8 unterscheidet sich lediglich dahingehend von derjenigen gemäß Figur 7, dass der Sensor 21 wie in den Figuren 5, 6 als Hall-Sensor dargestellt ist, und unmittelbar benachbart zu dem Rotorelement 31 angeordnet ist. Das Rotorelement 31 ist mit einem Erregerelement 51 zum Ansprechen des Sensors 21 wirkverbunden, wobei das Erregerelement 51 wenigstens teilweise magnetisch ausgebildet ist, beispielsweise als Magnetring. Ansonsten wird bezüglich Figur 8 auf die obigen Ausführungen zu Figur 7 verwiesen.

Liste der Bezugszeichen:

| | |
|---|---|
| 1 | Feuerlöschanlage |
| 3 | Sprinkler, Bereitschaftszustand |
| 3' | Sprinkler, Löschzustand |
| 5 | Durchflussmesseinrichtung |
| 7 | Elektronische Auswerteinheit |
| 9 | Anzeigegerät |
| 11 | Ventilstation |
| 13 | Hauptleitung, Teil der Löschfluidleitung |
| 15 | Nebenverteilerleitung, Teil der Löschfluidleitung |
| 17 | Erste Zweigstelle |
| 18 | Bypassleitung |
| 19 | Zweite Zweigstelle |
| 21 | Sensor |
| 23 | Strömungsleitelement |
| 25 | Gemeinsame Zweigstelle |
| 27 | Mündungs-Zweigleitung |

| 29 | Abzweigungsleitung |
|---|---|
| 31 | Rotorelement |
| 33 | Rotorblatt |
| 35 | Rotorachse |
| 37 | Fitting |
| 39 | Einsatz |
| 41 | Mittel zur Datenübertragung: Signalleitung |
| 43 | Abschirmelement |
| 45 | Generator |
| 47 | Mittel zur Datenübertragung: Sende- und/oder Empfangseinrichtung (drahtgebunden, drahtlos) |
| 49 | Energiespeicher |
| 51 | Erregerelement |
| 100 | Brand |
| L | Löschfluid |
| $Z_1, Z_2$ | Zonen |

**Patentansprüche**

1. Feuerlöschanlage (1), mit

    - mindestens einer Löschfluidleitung (13,15) zum Fördern eines Löschfluids (L), wobei sich die Löschfluidleitung ausgehend von einer Hauptleitung (13) in zwei oder mehr Nebenverteilerleitungen (15) aufteilt, von denen eine Erste in eine erste Zone ($Z_1$) führt und eine Zweite in eine zweite Zone ($Z_2$), wobei die Nebenverteilerleitungen (15) innerhalb ihrer jeweiligen Zonen ($Z_1, Z_2$) als Löschfluidleitungen für netzartig von ihnen abgehende Leitungen mit mehreren mit der Löschfluidleitung (13,15) fluidleitend in Verbindung stehenden Sprinklern (3,3') dienen, die in einem Bereitschaftszustand geschlossen sind, und in einem Löschzustand zum Ausbringen des Löschfluids (L) geöffnet sind, und
    - einer der Löschfluidleitung (13,15) zugeordneten Durchflussmesseinrichtung (5), wobei die Durchflussmesseinrichtung (5) in einer der Nebenverteilerleitungen (15) oder unmittelbar in der Hauptleitung (13) angeordnet und dazu eingerichtet ist, im Löschzustand einen in der Löschfluidleitung (13,15) geförderten Volumenstrom des Löschfluids überschlägig quantitativ zu erfassen, und durch eine Auswerteinheit (7), die dazu eingerichtet ist, dem überschlägig quantitativ erfassten Volumenstrom eine Anzahl geöffneter Sprinkler (3,3') zuzuordnen.

2. Feuerlöschanlage (1) nach Anspruch 1, wobei die Durchflussmesseinrichtung (5) ein Rotorelement (31) aufweist, und dazu eingerichtet ist, die Drehzahl des von dem Löschfluid (L) angetriebenen Rotorelements (31) zu erfassen.

3. Feuerlöschanlage (1) nach Anspruch 1 oder 2, wobei die Durchflussmesseinrichtung (5) einen Drucksensor zur Erfassung eines Staudrucks in der Löschfluidleitung (13, 15) aufweist, oder mehrere Drucksensoren an unterschiedlichen Stellen entlang der Löschfluidleitung (13, 15) zur Erfassung von Druckdifferenzen zwischen den Stellen aufweist.

4. Feuerlöschanlage (1) nach einem der vorstehenden Ansprüche, wobei die Durchflussmesseinrichtung (5) einen Thermoanemometrie-Sensor aufweist, und dazu eingerichtet ist, Temperaturänderungen eines von dem Löschfluid (L) umströmten Heizelements zu erfassen.

5. Feuerlöschanlage (1) nach einem der vorstehenden Ansprüche, wobei die Durchflussmesseinrichtung (5) einen Ultraschall-Durchflussmesser aufweist, und dazu eingerichtet ist, die Geschwindigkeit zumindest eines Teilstroms des Löschfluids (L) mittels Aussendung und Empfang akustischer Wellen zu erfassen.

6. Feuerlöschanlage (1) nach einem der vorstehenden Ansprüche, wobei die Durchflussmesseinrichtung (5) einen Spannungsmessaufnehmer zum Messen einer von einem Generator (45) induzierten Spannung aufweist, wobei der Generator (45) von einem Rotorelement (31) angetrieben ist, welches von Löschfluid (L) umströmt wird.

7. Feuerlöschanlage (1) nach einem der vorstehenden Ansprüche, wobei die Durchflussmesseinrichtung (5) ein Strömungswiderstandselement, beispielsweise in Form eines Paddels, aufweist, welches dazu eingerichtet ist, von dem Löschfluid (L) umströmt zu werden und infolge der Umströmung ausgelenkt zu werden, und wobei die Durchflussmesseinrichtung (5) dazu eingerichtet ist, die Auslenkung des Strömungswiderstandselements qualitativ oder quantitativ zu erfassen, insbesondere mittels Erfassung der auf das Strömungswiderstandselement wirkenden Kraft oder mittels Erfassung des Betrags der Auslenkung.

8. Feuerlöschanlage (1) nach einem der vorstehenden Ansprüche, wobei die Zuordnung zwischen dem überschlägig erfassten Volumenstrom und der Anzahl geöffneter Sprinkler (3') in Abhängigkeit eines, mehrerer oder sämtlicher der folgenden Parameter erfolgt:

    - ein vorbestimmtes Verhältnis zwischen dem tatsächlichen Volumenstrom des Löschfluids (L) und dem von der Durchflussmesseinrichtung (5) erfassten Volumenstrom,

- K-Faktoren der jeweiligen Sprinkler (3, 3'), und/oder
- Löschfluiddruck in der Löschfluidleitung (13, 15).

9. Feuerlöschanlage (1) nach einem der vorstehenden Ansprüche,
wobei die Auswerteinrichtung (7) dazu eingerichtet ist, den Verlauf der überschlägigen Erfassung des in der Löschfluidleitung (13, 15) geförderten Volumenstroms über die Zeit zu protokollieren und vorzugsweise in einem auslesbaren Datensatz zu hinterlegen.

10. Feuerlöschanlage (1) nach einem der Ansprüche 2 bis 9,

    wobei das Rotorelement (31) der Durchflussmesseinrichtung (5) mit einem Generator (45) zur Erzeugung elektrischer Energie gekoppelt ist,
und vorzugsweise mit einem Energiespeicher (49) für die von dem Generator (45) erzeugte elektrische Energie, wobei der Energiespeicher (49) mit den Mitteln (47) zur Datenübertragung zu deren Energieversorgung verbunden ist.

11. Feuerlöschanlage (1) nach einem der vorstehenden Ansprüche,
wobei die Durchflussmesseinrichtung (5) Mittel (41,47) zur drahtlosen oder kabelgebundenen Datenübertragung aufweist und dazu eingerichtet ist, die Werte des überschlägig erfassten Volumenstroms an die Auswerteinheit (7) zu senden.

12. Feuerlöschanlage (1) nach einem der vorstehenden Ansprüche,
mit wenigstens einem Anzeigegerät (9), das mit der Auswerteinheit (7) kommuniziert und dazu eingerichtet ist, die dem erfassten Volumenstrom zugeordnete Anzahl geöffneter Sprinkler (3') anzuzeigen.

13. Feuerlöschanlage (1) nach einem der vorstehenden Ansprüche,
wobei das Rotorelement (31) der Durchflussmesseinrichtung (5) peripher in der Löschfluidleitung (13, 15) angeordnet ist.

14. Feuerlöschanlage (1) nach einem der Ansprüche 1 bis 12,

    wobei die Durchflussmesseinrichtung (5) in einer Bypassleitung (18) angeordnet ist, die von der Löschfluidleitung (13, 15) abzweigt,
wobei vorzugsweise die Bypassleitung (18) an einer ersten Zweigstelle (17) von der Löschfluidleitung (13, 15) abzweigt, und stromabwärts an einer zweiten Zweigstelle (19) wieder in die Löschfluidleitung (13,15) mündet, oder
wobei vorzugsweise die Bypassleitung (18), in Flussrichtung des Löschfluids gesehen, an einer gemeinsamen Zweigstelle (25) sowohl von der Löschfluidleitung (13, 15) abzweigt als auch wieder in die Löschfluidleitung (13, 15) mündet.

15. Feuerlöschanlage nach einem der vorstehenden Ansprüche,
wobei für jede Zone ($Z_1$, $Z_2$) eine oder mehrere Durchflussmesseinrichtungen (5) vorgesehen sind.

16. Feuerlöschsystem, mit

    einer Feuerlöschanlage (1) nach einem der Ansprüche 11 bis 14 und
einem oder mehreren, vorzugsweise mobilen, Anzeigegeräten (9), die mit der Durchflussmesseinrichtung (5) und/oder der Auswerteinheit (7) kommunizieren und dazu eingerichtet sind, die dem erfassten Volumenstrom zugeordnete Anzahl geöffneter Sprinkler (3') anzuzeigen.

17. Verfahren zum Bestimmen der Ausbreitung eines Feuers bei einem mittels einer Feuerlöschanlage (1) geschützten Objekt oder Bereich, umfassend die Schritte:

    - Fördern eines Löschfluids (L) durch eine Löschfluidleitung (13, 15) der Feuerlöschanlage (1) wobei sich die Löschfluidleitung ausgehend von einer Hauptleitung (13) in zwei oder mehr Nebenverteilerleitungen (15) aufteilt, von denen eine Erste in eine erste Zone ($Z_1$) führt und eine Zweite in eine zweite Zone ($Z_2$), wobei die Nebenverteilerleitungen (15) innerhalb ihrer jeweiligen Zonen ($Z_1$, $Z_2$) als Löschfluidleitungen für netzartig von ihnen abgehende Leitungen mit mehreren mit der Löschfluidleitung (13,15) fluidleitend in Verbindung stehenden Sprinklern (3,3') dienen, zu jenen mehreren mit der Löschfluidleitung fluidleitend in Verbindung stehenden Sprinklern (3, 3'), wobei die Sprinkler in einem Bereitschaftszustand geschlossen sind, und in einem Löschzustand zum Ausbringen des Löschfluids geöffnet sind,
- überschlägiges quantitatives Erfassen eines in der Löschfluidleitung (13, 15) geförderten Volumenstroms des Löschfluids (L) mittels einer in einer der Nebenverteilerleitungen (15) oder unmittelbar in der Hauptleitung (13) angeordneten Durchflussmesseinrichtung (5) im Löschzustand, und
- Vornehmen einer Zuordnung zwischen dem überschlägig quantitativ erfassten Volumenstrom und einer Anzahl geöffneter Sprinkler (3').

**Claims**

1. A fire-extinguishing facility (1) comprising

    - at least one extinguishing fluid line (13,15) for conveying an extinguishing fluid (L), wherein, starting from a main line (13), the extinguishing fluid line is divided into two or more secondary distributor lines (15), a first of which leads into a first zone ($Z_1$), and a second one of which leads into a second zone ($Z_2$), wherein the secondary distributor lines (15) are used within their respective zones ($Z_1$, $Z_2$) as extinguishing fluid lines for lines branching off therefrom in the manner of a network having a plurality of sprinklers (3,3') in fluid communication with the extinguishing fluid line (13, 15) which are closed in a standby state and open in an extinguishing state in order to supply the extinguishing fluid (L), and
    - a flow-measuring device (5) associated with the extinguishing fluid line (13,15), wherein the flow-measuring device (5) is arranged in one of the secondary distributor lines (15) or directly in the main line (13) and is designed to approximately quantitatively detect a volume flow of the extinguishing fluid transported in the extinguishing fluid line (13, 15) in the extinguishing state, and **characterized by** an evaluation unit (7) which is configured to assign a number of open sprinklers (3') to the approximately quantitatively detected volume flow.

2. The fire-extinguishing facility (1) as claimed in claim 1,
    **characterized in that** the flow-measuring device (5) comprises a rotor element (31) and is designed to detect the speed of the rotor element (31) driven by the extinguishing fluid (L).

3. The fire-extinguishing facility (1) as claimed in claim 1 or 2,
    **characterized in that** the flow-measuring device (5) has a pressure sensor for detecting a dynamic pressure in the extinguishing fluid line (13, 15) or multiple pressure sensors at different points along the extinguishing fluid line (13, 15) for detecting pressure differences between the points.

4. The fire-extinguishing facility (1) as claimed in one of the preceding claims,
    **characterized in that** the flow-measuring device (5) has a thermo-anemometry sensor and is designed to detect temperature changes in a heating element which has extinguishing fluid (L) flowing round it.

5. The fire-extinguishing facility (1) as claimed in one of the preceding claims,
    **characterized in that** the flow-measuring device (5) comprises an ultrasound flow meter and is designed to detect the speed of at least one partial flow of the extinguishing fluid (L) by means of the transmission and receiving of acoustic waves.

6. The fire-extinguishing facility (1) as claimed in one of the preceding claims,
    **characterized in that** the flow-measuring device (5) has a voltmeter sensor for measuring a voltage induced by a generator (45), wherein the generator (45) is driven by a rotor element (31) which has extinguishing fluid (L) flowing around it.

7. The fire-extinguishing facility (1) as claimed in one of the preceding claims,
    **characterized in that** the flow-measuring device (5) has a flow resistance element in the form of a paddle, for example, which is designed to have extinguishing fluid (L) flowing around it and, as a result of the circulation, to be deflected, and wherein the flow-measuring device (5) is designed to detect the deflection of the flow resistance element in qualitative or quantitative terms, in particular by detecting the force acting on the flow resistance element or by detecting the deflection amount.

8. The fire-extinguishing facility (1) as claimed in one of the preceding claims,
    **characterized in that** the association between the approximately detected volume flow and the number of open sprinklers (3') depends on one, several, or all of the following parameters:

    - a predetermined relationship between the actual volume flow of the extinguishing fluid (L) and the volume flow detected by the flow-measuring device (5),
    - K-factors of the sprinklers (3, 3') in each case, and/or
    - the extinguishing fluid pressure in the extinguishing fluid line (13, 15).

9. The fire-extinguishing facility (1) as claimed in one of the preceding claims,
    **characterized in that** the evaluation unit (7) is designed to log the course of the approximate detection of the volume flow transported in the extinguishing fluid line (13, 15) over time, and preferably to deposit it in a readable data record.

10. The fire-extinguishing facility (1) as claimed in one of claims 2 to 9,

    **characterized in that** the rotor element (31) of the flow-measuring device (5) is coupled with a generator (45) for producing electrical energy, and
    preferably having an energy store (49) for the electrical energy produced by the generator (45), **characterized in that** the energy store (49) is connected to means (47) for data transfer for the energy supply thereof.

11. The fire-extinguishing facility (1) as claimed in one of the preceding claims, **characterized in that** the flow-measuring device (5) has means (41, 47) for wireless or wired data transmission and is designed to transmit the values of the approximately detected volume flow to the evaluation unit (7).

12. The fire-extinguishing facility (1) as claimed in one of the preceding claims, having at least one display unit (9) which communicates with the evaluation unit (7) and is designed to indicate the number of open sprinklers (3') associated with the detected volume flow.

13. The fire-extinguishing facility (1) as claimed in one of the preceding claims, **characterized in that** the rotor element (31) of the flow-measuring device (5) is arranged peripherally in the extinguishing fluid line (13, 15).

14. The fire-extinguishing facility (1) as claimed in one of claims 1 to 12,

   **characterized in that** the flow-measuring device (5) is arranged in a bypass line (18) which branches off from the extinguishing fluid line (13, 15),
   wherein preferably the bypass line (18) branches off from the extinguishing fluid line (13, 15) at a first branch (17) and opens back into the extinguishing fluid line (13, 15) downstream at a second branch (19), or
   wherein preferably the bypass line (18) branches from the extinguishing fluid line (13, 15) at a common branch (25) and opens back into the extinguishing fluid line (13, 15), viewed in the flow direction of the extinguishing fluid.

15. The fire-extinguishing facility (1) as claimed in one of the preceding claims, wherein one or more flow measuring devices (5) are provided for each zone ($Z_1$, $Z_2$).

16. A fire-extinguishing system comprising

   a fire-extinguishing facility (1) as claimed in one of claims 11 to 14 and
   one or more, preferably mobile, display units (9) which communicate with the flow-measuring device (5) and/or the evaluation unit (7) and are designed to display the number of open sprinklers (3') associated with the volume flow detected.

17. A method for determining the propagation of a fire in the case of a property or area protected by a fire-extinguishing facility (1) comprising the steps:

   - conveying an extinguishing fluid (L) through an extinguishing fluid line (13, 15) of the fire-extinguishing facility (1), wherein, starting from a main line (13), the extinguishing fluid line is divided into two or more secondary distributor lines (15), a first of which leads into a first zone ($Z_1$), and a second one of which leads into a second zone ($Z_2$), wherein the secondary distributor lines (15) are used within their respective zones ($Z_1$, $Z_2$) as extinguishing fluid lines for lines branching off therefrom in the manner of a network with a plurality of sprinklers (3,3') connected to the extinguishing fluid line (13, 15), towards those multiple sprinklers (3, 3') that are in fluid communication with the extinguishing fluid line, which sprinklers are closed in a standby state and open in an extinguishing state in order to supply the extinguishing fluid,
   - approximate quantitative detection of a volume flow of the extinguishing fluid (L) transported in the extinguishing fluid line (13, 15) in the extinguishing state by means of a flow-measuring device (5) arranged in one of the secondary distributor lines (15) or directly in the main line (13), and
   - establishing of an association between the approximately quantitatively detected volume flow and a number of open sprinklers (3').

**Revendications**

1. Installation d'extinction d'incendie (1), avec

   - au moins une conduite de fluide d'extinction (13, 15) pour transporter un fluide d'extinction (L), dans laquelle la conduite de fluide d'extinction se divise à partir d'une conduite principale (13) en deux conduites de distribution auxiliaires (15) ou plus, dont une première mène dans une première zone ($Z_1$) et une deuxième dans une deuxième zone ($Z_2$), dans laquelle les conduites de distribution auxiliaires (15) à l'intérieur de leurs zones ($Z_1$, $Z_2$) respectives servent de conduites de fluide d'extinction pour des conduites partant de celles-ci à la façon d'un treillis avec plusieurs gicleurs d'incendie (3, 3') en liaison fluidique avec la conduite de fluide d'extinction (13, 15), qui dans un état d'attente sont fermés, et dans un état d'extinction sont ouverts pour l'émission du fluide d'extinction (L), et
   - un dispositif de mesure de débit (5) associé à la conduite de fluide d'extinction (13, 15), dans laquelle le dispositif de mesure de débit (5) est disposé dans une des conduites de distribution auxiliaires (15) ou directement dans la conduite principale (13) et est conçu pour, dans l'état d'extinction, détecter de manière quantitative et approximative un débit volumétrique du fluide d'extinction transporté dans la conduite de fluide d'extinction (13, 15), et par une unité d'évaluation (7), qui est conçue pour associer un nombre de gicleurs d'incendie (3, 3') ouverts au débit volumétrique détecté de manière quantitative et approximative.

**2.** Installation d'extinction d'incendie (1) selon la revendication 1,
dans laquelle le dispositif de mesure de débit (5) présente un élément rotor (31), et est conçu pour détecter la vitesse de rotation de l'élément rotor (31) entraîné par le fluide d'extinction (L).

**3.** Installation d'extinction d'incendie (1) selon la revendication 1 ou 2,
dans laquelle le dispositif de mesure de débit (5) présente un capteur de pression pour détecter une pression dynamique dans la conduite de fluide d'extinction (13, 15), ou plusieurs capteurs de pression à différents points le long de la conduite de fluide d'extinction (13, 15) pour détecter des différences de pression entre les points.

**4.** Installation d'extinction d'incendie (1) selon l'une quelconque des revendications précédentes,
dans laquelle le dispositif de mesure de débit (5) présente un capteur thermoanémomètre, et est conçu pour détecter des changements de température d'un élément chauffant baigné par le fluide d'extinction (L).

**5.** Installation d'extinction d'incendie (1) selon l'une quelconque des revendications précédentes,
dans laquelle le dispositif de mesure de débit (5) présente un débitmètre à ultrasons, et est conçu pour détecter la vitesse d'au moins un flux partiel du fluide d'extinction (L) au moyen de l'émission et de la réception d'ondes acoustiques.

**6.** Installation d'extinction d'incendie (1) selon l'une quelconque des revendications précédentes,
dans laquelle le dispositif de mesure de débit (5) présente un détecteur de mesure de tension pour mesurer une tension induite par un générateur (45), dans laquelle le générateur (45) est entraîné par un élément rotor (31), lequel est baigné par le fluide d'extinction (L).

**7.** Installation d'extinction d'incendie (1) selon l'une quelconque des revendications précédentes,

dans laquelle le dispositif de mesure de débit (5) présente un élément de résistance à l'écoulement, par exemple sous forme d'une pagaie, lequel est conçu pour être baigné par le fluide d'extinction (L) et pour être dévié du fait de l'écoulement le baignant, et dans laquelle le dispositif de mesure de débit (5) est conçu pour détecter la déviation de l'élément de résistance à l'écoulement de manière qualitative ou quantitative, en particulier au moyen de la détection de la force agissant sur l'élément de résistance à l'écoulement ou au moyen de la détection de la grandeur de la déviation.

**8.** Installation d'extinction d'incendie (1) selon l'une quelconque des revendications précédentes,
dans laquelle l'association entre le débit volumétrique détecté de manière approximative et le nombre de gicleurs d'incendie (3') ouverts s'effectue en fonction d'un, de plusieurs ou de tous les paramètres suivants :

- un rapport prédéfini entre le débit volumétrique effectif du fluide d'extinction (L) et le débit volumétrique détecté par le dispositif de mesure de débit (5),
- des facteurs K des gicleurs d'incendie (3, 3') respectifs, et/ou
- la pression de fluide d'extinction dans la conduite de fluide d'extinction (13, 15).

**9.** Installation d'extinction d'incendie (1) selon l'une quelconque des revendications précédentes,
dans laquelle le dispositif d'évaluation (7) est conçu pour consigner la variation de la détection approximative du débit volumétrique transporté dans la conduite de fluide d'extinction (13, 15) dans le temps et pour la mettre en mémoire de préférence dans un ensemble de données pouvant être consulté.

**10.** Installation d'extinction d'incendie (1) selon l'une quelconque des revendications 2 à 9,

dans laquelle l'élément rotor (31) du dispositif de mesure de débit (5) est accouplé à un générateur (45) pour la production d'énergie électrique,
et de préférence à un accumulateur d'énergie (49) pour l'énergie électrique produite par le générateur (45), dans laquelle l'accumulateur d'énergie (49) est relié aux moyens (47) pour la transmission de données pour l'alimentation en énergie de ceux-ci.

**11.** Installation d'extinction d'incendie (1) selon l'une quelconque des revendications précédentes,
dans laquelle le dispositif de mesure de débit (5) présente des moyens (41, 47) pour la transmission de données sans fil ou filaire et est conçu pour envoyer les valeurs du débit volumétrique détecté de manière approximative à l'unité d'évaluation (7).

**12.** Installation d'extinction d'incendie (1) selon l'une quelconque des revendications précédentes, avec au moins un appareil d'affichage (9), qui communique avec l'unité d'évaluation (7) et est conçu pour afficher le nombre de gicleurs d'incendie (3') ouverts associé au débit volumétrique détecté.

**13.** Installation d'extinction d'incendie (1) selon l'une quelconque des revendications précédentes, dans laquelle l'élément rotor (31) du dispositif de mesure de débit (5) est disposé de manière périphérique dans la conduite de fluide d'extinction (13, 15).

**14.** Installation d'extinction d'incendie (1) selon l'une quelconque des revendications 1 à 12,

dans laquelle le dispositif de mesure de débit (5) est disposé dans une conduite de dérivation (18), qui bifurque de la conduite de fluide d'extinction (13, 15),

dans laquelle de préférence la conduite de dérivation (18) sur un premier point de bifurcation (17) bifurque de la conduite de fluide d'extinction (13, 15), et en aval sur un deuxième point de bifurcation (19) débouche à nouveau dans la conduite de fluide d'extinction (13, 15), ou

dans laquelle de préférence la conduite de dérivation (18), vue dans la direction de flux du fluide d'extinction, sur un point de bifurcation (25) commun aussi bien bifurque de la conduite de fluide d'extinction (13, 15) que débouche à nouveau dans la conduite de fluide d'extinction (13, 15).

**15.** Installation d'extinction d'incendie selon l'une quelconque des revendications précédentes, dans laquelle un ou plusieurs dispositifs de mesure de débit (5) sont prévus pour chaque zone ($Z_1$, $Z_2$).

**16.** Système d'extinction d'incendie avec

une installation d'extinction d'incendie (1) selon l'une quelconque des revendications 11 à 14 et un ou plusieurs appareils d'affichage (9), de préférence mobiles, qui communiquent avec le dispositif de mesure de débit (5) et/ou l'unité d'évaluation (7) et sont conçus pour afficher le nombre de gicleurs d'incendie (3') ouverts associés au débit volumétrique détecté.

**17.** Procédé pour la détermination de la propagation d'un feu pour un objet ou une zone protégé(e) au moyen d'une installation d'extinction d'incendie (1), comprenant les étapes :

- de transport d'un fluide d'extinction (L) à travers une conduite de fluide d'extinction (13, 15) de l'installation d'extinction d'incendie (1), dans lequel la conduite de fluide d'extinction se divise à partir d'une conduite principale (13) en deux conduites de distribution auxiliaires (15) ou plus, dont une première mène dans une première zone ($Z_1$) et une deuxième dans une deuxième zone ($Z_2$), dans lequel les conduites de distribution auxiliaires (15) à l'intérieur de leurs zones ($Z_1$, $Z_2$) servent de conduites de fluide d'extinction pour des conduites partant de celles-ci à la façon d'un treillis avec plusieurs gicleurs d'incendie (3, 3') en liaison fluidique avec la conduite de fluide d'extinction (13, 15), vers ces plusieurs gicleurs d'incendie (3, 3') en liaison fluidique avec la conduite de fluide d'extinction, dans lequel les gicleurs d'incendie dans un état d'attente sont fermés, et dans un état d'extinction sont ouverts pour l'émission du fluide d'extinction,

- de détection quantitative approximative d'un débit volumétrique du fluide d'extinction (L) transporté dans la conduite de fluide d'extinction (13, 15) au moyen d'un dispositif de mesure de débit (5) disposé dans une des conduites de distribution auxiliaires (15) ou directement dans la conduite principale (13) dans l'état d'extinction, et

- de réalisation d'une association entre le débit volumétrique détecté de manière quantitative et approximative et d'un nombre de gicleurs d'incendie (3') ouverts.

FIG. 1

EP 3 612 279 B1

**FIG. 2**

EP 3 612 279 B1

**FIG. 3**

FIG. 4

**FIG. 5**

FIG. 6

**FIG. 7**

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006248961 A1